# FASCICULE DE BREVET EUROPEEN

(11) **EP 0 946 916 B1**
(45) Date de publication et mention de la délivrance du brevet: **27.02.2002**
(21) Numéro de dépôt: 97952075.6
(22) Date de dépôt: 16.12.1997
(51) Int. Cl.: G06F 13/12

(54) **CONTROLEUR D'ENTREES-SORTIES AUTONOME ET DEPORTE**
UNABHÄNGIGE, ENTFERNTE EIN-/AUSGABESTEUERVORRICHTUNG
OFFSET AUTONOMOUS INPUT/OUTPUT CONTROLLER

(30) Priorité: 20.12.1996 FR 9615745
(43) Date de publication de la demande: 06.10.1999
(73) Titulaire: THALES AVIONICS S.A., 78141 Vélizy Villacoublay Cédex (FR)
(72) Inventeur: PITOT, Christian-Thomson-CSF S.C.P.I., F-94117 Arcueil Cedex (FR); LE BORGNE, Olivier-Thomson-CSF S.C.P.I., F-94117 Arcueil Cedex (FR)
(74) Mandataire: Simonnet, Christine
(86) Numéro de dépôt international: FR9702316
(87) Numéro de publication internationale: WO9828694

(56) Documents cités:
- EP-A- 0 694 842
- "AUTONOMOUS INPUT/OUTPUT CONTROLLER - Part 1" ELEKTOR ELECTRONICS, vol. 14, no. 162, décembre 1988, LONDON, GB, pages 30-36, XP000112248
- "AUTONOMOUS I/O CONTROLLER - Final Part" ELEKTOR ELECTRONICS, vol. 15, no. 163, janvier 1989, LONDON, GB, pages 40-44, XP000047674

## Description

La présente invention est relative à un contrôleur d'entrées-sorties devant coopérer avec l'unité centrale d'un calculateur qui communique avec différents équipements électroniques périphériques. Ce contrôleur d'entrées-sorties peut être utilisé notamment dans le domaine avionique.

Actuellement dans les aérodynes plusieurs calculateurs cohabitent, ils pilotent chacun une seule application. Par application, on entend par exemple le pilote automatique, le système de détection de proximité du sol, le système de protection contre le décrochement etc.....

Dans chaque calculateur l'unité centrale est reliée par un bus parallèle aux équipements électroniques périphériques appartenant à l'application concernée. Cette liaison par bus parallèle permet de transmettre des informations à haut débit mais elle nécessite un grand nombre de broches de connexion.

Une telle liaison apporte une certaine insécurité car, si une panne apparaît, toutes les données transitant sur cette liaison sont perdues. Puisque chaque application est traitée indépendamment des autres cette insécurité est tolérable.

Avec le développement important de la vitesse et de la capacité des processeurs et en vue de réduire les coûts, il est envisageable qu'une seule unité centrale pilote plusieurs applications mais cela entraîne un nouveau risque de propagation d'erreurs entre applications tendant à augmenter l'insécurité au niveau de chacune des applications.

La demande européenne de brevet EP 0 694 842 décrit un procédé de sécurisation du déroulement de séquences linéaires d'ordres exécutés par un processeur permettant de se prémunir contre une propagation d'erreurs entre des applications différentes traitées par une même unité centrale en donnant la possibilité de vérifier le bon adressage en lecture d'une mémoire stockant des instructions à exécuter en séquences.

La présente invention a pour but de lutter contre la propagation d'erreurs entre des applications différentes traitées par une même unité centrale en intervenant au niveau des entrées-sorties du calculateur faisant l'interface entre l'unité centrale du calculateur et différents équipements électroniques périphériques, extérieurs au calculateur, utilisés par les applications traitées par l'unité centrale.

Elle a pour objet un contrôleur d'entrées-sorties tel que definit à la revendication 1.

Ce contrôleur d'entrées-sorties est autonome et peut fonctionner avec tous types d'unité centrale et d'équipements électroniques périphériques.

Un ou plusieurs types d'instructions en provenance de la mémoire peuvent être qualifiées de pseudo-instructions formées de listes de valeurs analogiques, stockées dans la mémoire, les types différents correspondant à des listes de valeurs de natures différentes.

Certaines instructions autres que les pseudo-instructions, en provenance de la mémoire, peuvent former des séquences exécutées après une instruction de synchronisation.

Le dispositif séquenceur peut allouer des tranches de temps égales pour le traitement successif de chacun des types d'instructions, puis s'octroyer un intervalle de temps sans traitement, éventuellement nul, avant de recommencer le traitement. Chaque type d'instructions est traité avec la même fréquence.

Un séquencement plus sophistiqué peut être envisagé de manière à permettre un traitement avec des fréquences adaptées aux différents types d'instructions. Un tel séquencement répond beaucoup mieux aux besoins rencontrés dans une application avionique.

Le dispositif séquenceur peut allouer des tranches de temps égales au traitement des instructions selon leur type, chaque type d'instructions étant affecté d'une période d'occurrence, le premier type d'instructions traité possédant la période la plus petite, cette période étant dite période de référence et une phase dite de référence, les autres types d'instructions possédant une contrainte de phase par rapport à la phase de référence, ces autres types d'instructions étant traités avec un rang fonction de l'ordre croissant de leur contrainte de phase, leur période étant un multiple de la période de référence.

Il est plus simple de choisir par convention une phase de référence nulle.

La période de référence peut être un multiple d'une durée, dite période de base, qui correspond au temps d'accès à une instruction dans la mémoire.

II est avantageux d'exprimer la contrainte de phase du second type d'instructions traité par un incrément de phase par rapport à la phase de référence. Celles des types d'instructions de rang supérieur par un incrément de phase par rapport à la contrainte de phase du type d'instructions traité au rang précédent.

Un dispositif séquenceur permettant de traiter les différents types d'instructions avec des fréquences différentes peut comporter:
- un dispositif délivrant une phase dite courante à partir d'une horloge de base dont la période correspond au temps d'accès à une instruction dans la mémoire,
- un premier diviseur de l'horloge de base recevant en plus de l'horloge de base, la valeur de la période de référence et qui génère des impulsions ayant la période de référence et la phase de référence;
- un ensemble pré diviseur, diviseur associé respectivement à chacun des autres types d'instructions à traiter, recevant l'horloge de base et la période de référence,

chaque pré diviseur recevant la valeur de la période de référence et un signal de démarrage issu de la comparaison entre la contrainte de phase du type d'instructions associé et la phase courante, et générant, vers le diviseur du même ensemble que lui, un signal de période égale à la période de référence et phasé selon la contrainte de phase du type d'instructions associé,
chaque diviseur générant des impulsions ayant la période et la contrainte de phase du type d'instructions associé.

Le dispositif délivrant la phase courante peut être réalisé par un compteur à saturation recevant l'horloge de base.

Le compteur à saturation peut être remis à zéro lors d'un ré enclenchement du contrôleur d'entrées-sorties ou par un signal délivré par un dispositif de recalage.

Chaque pré diviseur peut être associé à un comparateur qui lui délivre le signal de démarrage, chaque comparateur recevant la phase courante et la contrainte de phase, par rapport à la phase de référence, du type d'instructions associé.

Le premier comparateur reçoit directement la valeur de l'incrément de phase du second type d'instructions par rapport à la phase de référence tandis que les autres comparateurs sont associés chacun à un additionneur, chaque additionneur délivrant la contrainte de phase, par rapport à la phase de référence, du type d'instructions associé, et recevant la contrainte de phase du type d'instructions traité avec le rang précédent et la valeur de l'incrément de phase par rapport à la dite contrainte.

Une instruction autre qu'une pseudo-instruction peut être de type ARINC 429 et comporter trente-deux bits parmi lesquels un code sur au plus huit bits et un paramètre sur au plus vingt et un bits.

Les valeurs des périodes d'occurrence et des contraintes de phase des différents types d'instructions peuvent être codées dans le paramètre d'une ou plusieurs instructions de chargement.

Le contrôleur d'entrées-sorties selon l'invention peut comporter un dispositif d'analyse de code qui décode les codes des instructions.

Une pseudo-instruction est exécutée sous le contrôle d'une instruction d'activation. Elle comporte sur trente-deux bits une liste de valeurs analogiques qui sont codées soit sous forme d'incréments, soit sous forme de valeurs absolues.

Le contrôleur d'entrées-sorties peut comporter pour gérer les pseudo-instructions, des moyens de pilotage des pseudo-instructions qui reçoivent les instructions d'activation, qui conservent les codes des instructions d'activation et se chargent de l'accès à la mémoire via un pointeur d'accès. Le dispositif d'analyse de code reçoit les pseudo-instructions et les codes des instructions d'activation des moyens de pilotage des pseudo-instructions.

Si plusieurs accès à la mémoire sont nécessaires pour extraire une instruction, il est souhaitable que le contrôleur d'entrées-sorties comporte des moyens de gestion de la mémoire avec un bloc tampon piloté par le dispositif séquenceur. Le bloc tampon peut aussi être piloté par les moyens de pilotage des pseudo-instructions.

Les moyens de gestion de la mémoire peuvent également comporter un dispositif séquenceur de téléchargement de la mémoire à partir d'instructions reçues de l'unité centrale.

Il est avantageux que le contrôleur d'entrées-sorties puisse communiquer en acquisition ou en génération avec les équipements électroniques périphériques par plusieurs voies d'interface bidirectionnelles susceptibles d'être configurées notamment en bus parallèle, en liaison véhiculant des booléens, en liaison série, en liaison avec codeur optique, et pour cela le contrôleur d'entrées-sorties peut comporter au moins un dispositif d'interface relié aux équipements électroniques périphériques au moins une des ces voies d'interface. Ce dispositif d'interface est tout à fait standard.

De la même manière, il peut être prévu un dispositif d'interface avec l'unité centrale, relié à l'unité centrale par les lignes d'entrée et de sortie.

L'invention sera mieux comprise et d'autres caractéristiques et avantages apparaîtront à la lecture de la description des exemples de réalisation, illustrée par les figures annexées qui représentent :
- la figure 1 au moins un contrôleur d'entrées-sorties selon l'invention dans son contexte;
- la figure 2 la structure d'un contrôleur d'entrées-sorties selon l'invention;
- la figure 3 un dispositif séquenceur apte à traiter les différents types d'instructions avec des fréquences adaptées.

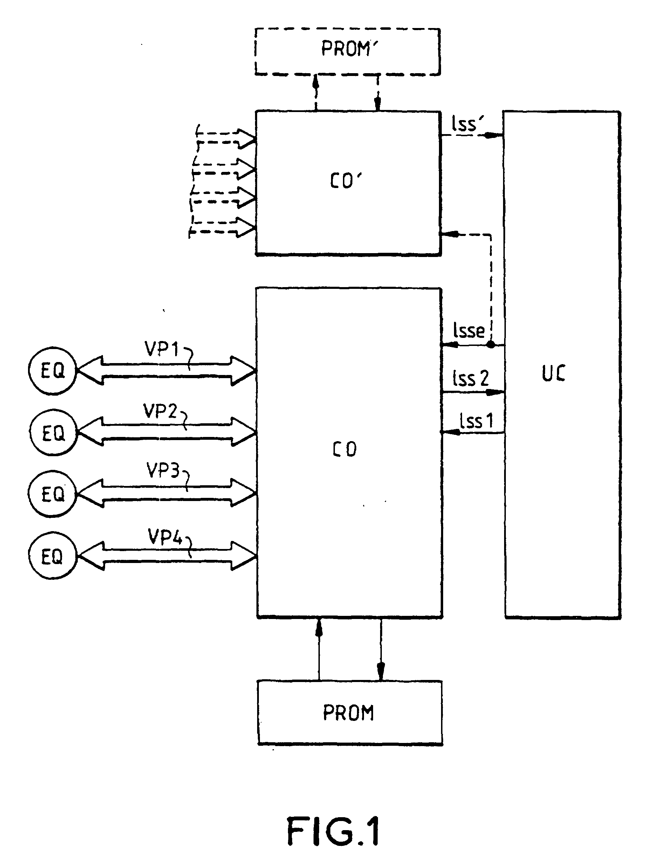

La figure 1 montre de manière très schématique un premier contrôleur d'entrées-sorties CO selon l'invention, dans son environnement. Dans cet exemple, il est prévu pour fonctionner dans une application avionique.

Ce contrôleur d'entrées-sorties CO est destiné à coopérer avec une unité centrale UC d'un calculateur (non représenté) qui communique avec des équipements électroniques EQ périphériques. Dans l'application avionique, ces équipements électroniques EQ périphériques sont des capteurs ou des actuateurs. Le contrôleur d'entrées-sorties CO reçoit des instructions d'un premier type de l'unité centrale UC par une ligne série Isse d'entrée et émet des informations vers l'unité centrale UC par au moins une ligne série Iss de sortie. Dans l'exemple décrit, de préférence, deux lignes série Iss1, Iss2 de sortie sont utilisées. Il est possible de prévoir que l'une des lignes série de sortie Iss1 n'émette des informations, via le contrôleur d'entrées-sorties CO, qu'en provenance des équipements électroniques EQ périphériques et que l'autre Iss2 puisse émettre des informations, via le contrôleur d'entrées-sorties CO, en provenance équipements électroniques EQ périphériques mais aussi en provenance d'autres dispositifs comme on le verra ultérieurement. De manière optionnelle plusieurs contrôleurs d'entrées-sorties conformes à l'invention peuvent être reliés à une même unité centrale UC par la même ligne série d'entrée lse. Sur la figure 1 un second contrôleur d'entrées-sorties CO' a été représenté en pointillés. Ce second contrôleur d'entrées-sorties CO' est relié à l'unité centrale UC par au moins une ligne de sortie Iss'.

Chaque contrôleur d'entrées-sorties CO, CO' est destiné à coopérer avec une mémoire respectivement référencée PROM, PROM' extérieure à l'unité centrale UC. Ils reçoivent des instructions d'un ou plusieurs types de la mémoire PROM, PROM' associée.

La suite de la description est faite pour le contrôleur d'entrées-sorties CO, les autres seraient semblables. Le contrôleur d'entrées-sorties CO est destiné à communiquer en acquisition ou en génération d'informations avec les équipements électroniques EQ périphériques. Plusieurs liaisons ou voies d'interface VP1, VP2, VP3, VP4 bidirectionnelles sort prévues entre le contrôleur d'entrées-sorties CO et les équipements électroniques EQ périphériques. Ces voies d'interface VP1, VP2, VP3, VP4 sont susceptibles d'être configurées par les instructions reçues par le contrôleur d'entrées-sorties CO, notamment en bus parallèles, en liaisons véhiculant des booléens, en liaisons série et même en liaisons avec codeur optique et peuvent fonctionner en entrée ou en sortie. Dans l'exemple représenté sur la figure 1, on suppose qu'à un instant donné la première voie VP1 est configurée en bus parallèle en entrée, la seconde voie VP2 est configurée en liaison véhiculant des booléens en sortie, la troisième voie VP3 est configurée en liaison série en sortie et que la quatrième voie VP4 est configurée en liaison avec codeur optique en entrée.

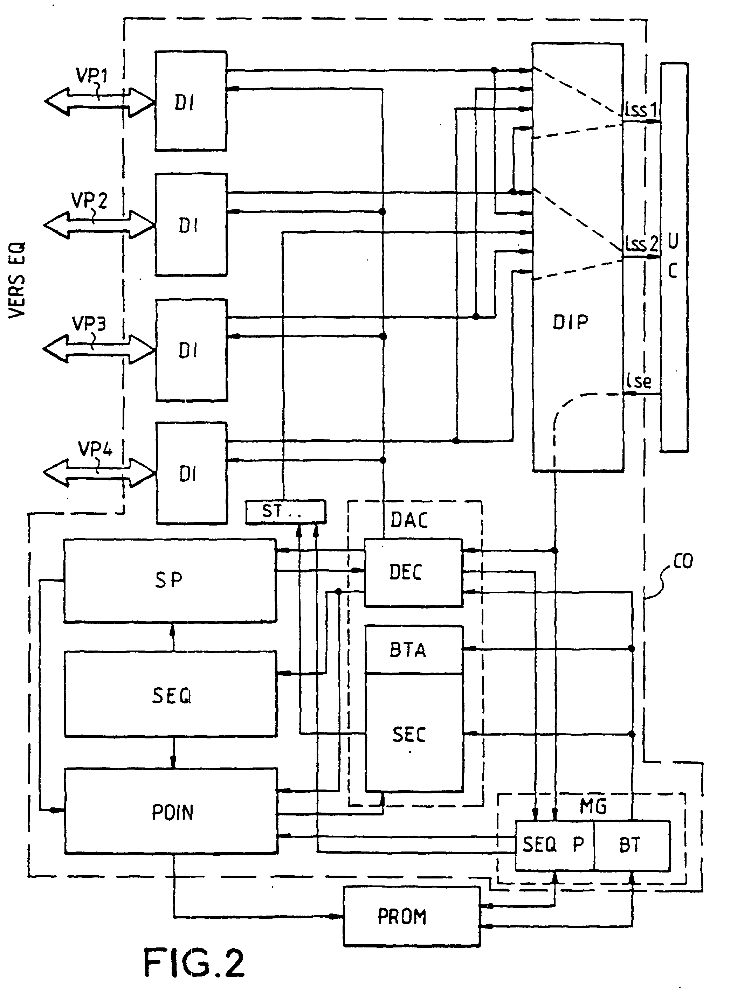

La figure 2 montre de manière détaillée les différentes fonctions d'un contrôleur d'entrées-sorties selon l'invention.

Le contrôleur d'entrées-sorties CO comporte au moins un dispositif d'interface Dl avec les équipements électroniques EQ périphériques. Ce dispositif d'interface Dl est relié aux équipements électroniques EQ périphériques par au moins une voie d'interface VP1, VP2, VP3, VP4. Dans l'application avionique de l'exemple décrit, quatre dispositifs d'interfaces Dl série-parallèle standardisés identiques sont suffisants pour communiquer avec tous les équipements électroniques EQ périphériques présents. Plus de détails sur les dispositifs d'interface Dl seront donnés ultérieurement.

Le contrôleur d'entrées-sorties CO comporte un dispositif d'interface DIP relié à l'unité centrale UC par les lignes d'entrée Ise et de sortie Iss1, Iss2.

Le contrôleur d'entrées-sorties CO est destiné à recevoir des instructions d'une part de l'unité centrale UC et d'autre part de la mémoire PROM et à les traiter c'est-à-dire les décoder dans un dispositif d'analyse de code DAC, les aiguiller vers des organes appropriés, c'est-à-dire les équipements électroniques EQ périphériques ou l'unité centrale UC. Le contrôleur d'entrées-sorties CO traite les instructions alternativement selon leur type et il comporte pour cela un dispositif séquenceur SEQ. Son fonctionnement va être décrit ultérieurement.

Un ou plusieurs types d'instructions en provenance de la mémoire PROM peuvent être qualifiées de pseudo-instructions. Une pseudo-instruction consiste en une liste de valeurs analogiques stockées dans la mémoire PROM. Ces pseudo-instructions sont exploitées sous le contrôle d'une instruction d'activation et jusqu'à une instruction de désactivation.

Dans l'application avionique, ces listes de valeurs analogiques peuvent correspondre à une forme d'onde à émettre pour exciter un capteur ou à un signal audio, par exemple, une alarme à faire retentir pour alerter l'équipage. Les types différents correspondent à des listes de valeurs de natures différentes. Dans l'exemple décrit, on suppose que deux types différents d'instructions sous forme de listes de valeurs analogiques peuvent provenir de la mémoire PROM. Dans la suite de la description lorsque le terme instruction est employé sans indication particulière ce terme englobe aussi les pseudo-instructions.

Certaines instructions autres que les pseudo-instructions, en provenance de la mémoire PROM peuvent être exécutées en séquence après une instruction de synchronisation.

Une instruction autre qu'une pseudo-instruction est calquée sur celui d'un mot ARINC 429 avec 32 bits. Elle comporte un code sur 8 bits (bits 0 à 7) au plus qui indique l'action à exécuter, les bits 8 et 9 servent à la sécurité. Une action d'acquisition de données des équipements électroniques EQ périphériques vers l'unité centrale UC est codée sur cinq bits (bits 0 à 4). Ces bits indiquent la nature de l'acquisition. Le bit 5 renseigne sur la ligne série de sortie Iss1 ou Iss2 à emprunter vers l'unité centrale UC et les bits 6 et 7 renseignent sur le dispositif d'interface Dl et la voie d'interface concernés.

De la même manière, une action de génération de données vers un équipement électronique EQ périphérique est codée sur 6 bits (bits 0 à 5). Ces bits indiquent la nature de la génération de données. Les bits 6 et 7 renseignent sur le dispositif d'interface DI et la voie d'interface concernés.

Les bits 8 et 9 d'une instruction qui provient de l'unité centrale UC identifient le contrôleur d'entrées-sorties CO, CO' destinataire puisqu'il peut y en avoir plusieurs.

Lorsque l'instruction consiste à émettre une donnée vers l'unité centrale UC, le code comporte un label qui doit précéder la donnée à émettre. Lorsque l'instruction consiste à émettre une donnée d'un équipement électronique EQ périphérique vers l'unité centrale UC les bits 8 et 9 identifient l'émetteur.

Une instruction comporte aussi sur 21 bits (bits 10 à 30) au plus un paramètre, ce paramètre peut représenter une adresse de base dans la mémoire PROM, par exemple pour des instructions de téléchargement de la mémoire PROM, des instructions de synchronisation ou d'activation, une donnée de programmation par exemple pour programmer le séquencement, une valeur à transmettre vers les équipements électroniques EQ périphériques ou vers l'unité centrale UC, une durée par défaut lorsqu'aucun autre paramètre n'est requis. Lorsque le paramètre comporte moins de 21 bits, les données codées le sont sur les poids les plus faibles (bits 10 et suivants). Le bit 31 est un bit de parité et la parité d'une instruction est impaire.

Certaines instructions peuvent utiliser 16 bits du paramètre pour coder des données et les cinq bits suivants comme contrôle. Ces instructions sont utilisées préférentiellement pour piloter les dispositifs d'interface Dl auxquels sont connectés les équipements électroniques EQ périphériques.

Les instructions en provenance de la mémoire PROM ne peuvent utiliser certains codes, tels que ceux qui correspondent à l'effacement, au téléchargement et à la relecture de la mémoire PROM. Ces codes sont à l'usage exclusif de l'unité centrale UC.

Une instruction d'activation comportera comme code l'action à réaliser, ce qui peut correspondre au destinataire des valeurs analogiques et comme paramètre l'adresse de pointage initial de la séquence de valeurs analogiques devant être extraite de la mémoire PROM.

Le contrôleur d'entrées-sorties CO comporte également des moyens de pilotage SP des pseudo-instructions. Ces moyens de pilotage SP reçoivent du dispositif d'analyse de code DAC, les instructions d'activation et de désactivation. Ils conservent le code des instructions d'activation et se chargent de l'accès à la mémoire PROM via un pointeur d'accès POIN et de l'émission de la pseudo-instruction et du code vers le dispositif d'analyse de code DAC.

Le pointeur d'accès POIN sert d'autre part pour accéder à la mémoire PROM après une instruction de synchronisation qui comporte comme paramètre l'adresse de pointage initial de la première instruction de la séquence à exécuter ou pour générer des valeurs standardisées qui servent dans les séquences d'effacement et de programmation de la mémoire PROM.

Mis bout à bout les bits 8 des instructions en séquence en provenance de la mémoire PROM peuvent coder l'adresse courante du pointeur d'accès à la PROM selon le brevet français publié sous le n° 2 723 222 au nom de la demanderesse. Le bit 9 identifie le point d'entrée d'une séquence stockée dans la mémoire PROM.

Les pseudo-instructions lues de la mémoire PROM peuvent revêtir différents formats sur 32 bits en fonction de la dynamique et de l'amplitude des valeurs analogiques à transmettre. Les valeurs analogiques peuvent être codées sous forme d'incrément ou sous forme de valeur absolue.

Par exemple, une pseudo-instruction peut contenir 3 valeurs de 9 bits ou bien 4 valeurs de 7 bits ou bien même 2 valeurs de 14 bits.

Le dernier bit est un bit de parité et la parité d'une pseudo-instruction est impaire. L'avant dernier bit est un bit de sécurité. Mis bout à bout les bits de sécurité d'une liste de pseudo-instructions successives peuvent coder l'inverse de l'adresse courante du pointeur d'accès à la mémoire PROM selon le brevet français publié sous le n° 2 723 222 au nom de la demanderesse.

Le fait de choisir un codage inverse pour les séquences d'instructions et les séquences de valeurs analogiques permet de garantir l'impossibilité pour le programme d'exécuter par mégarde une séquence de valeurs analogiques au lieu d'une séquence d'instructions et vice versa.

On peut alors détecter et prévenir l'exécution d'une séquence ne correspondant pas au contexte d'exécution par l'utilisation de codage de différents invariants selon le contexte.

Les autres bits libres des pseudo-instructions indiquent si les valeurs sont codées sous forme d'incrément ou de valeur absolue et si on est en présence ou non d'une fin de séquence.

Ce codage sous forme d'incrément ou de valeur absolue permet d'optimiser l'espace occupé dans la mémoire PROM notamment pour les sons. Les périodes de faible dynamique peuvent être avantageusement codées sous forme d'incrément soit de 7 bits soit de 9 bits tandis que les périodes de faibles amplitudes peuvent être codées sous forme de valeur absolue de 9 bits ou d'incrément de 7 bits. Les valeurs de 14 bits quant à elles représentent des valeurs absolues.

On a vu que le dispositif d'analyse de code DAC reçoit des instructions d'un premier type de l'unité centrale UC et des instructions d'un ou plusieurs types de la mémoire PROM. Il les traite de manière alternative selon un cadencement alloué par le dispositif séquenceur SEQ. Le cadencement peut être fixe ou programmable.

Plus généralement, si le contrôleur d'entrées-sorties CO a à traiter des instructions de n types, le dispositif séquenceur SEQ peut découper le temps de traitement en n + 1 tranches (n est un entier supérieur ou égal à deux), n de ces tranches égales étant consacrées au traitement successif de chacun des n types d'instructions, la dernière tranche de durée programmable éventuellement nulle permet d'ajuster la récurrence du séquencement. A l'issue de la dernière tranche le traitement recommence.

On suppose dans l'exemple décrit que le contrôleur d'entrées-sorties CO reçoit trois types d'instructions de la mémoire PROM dont deux types correspondent à des pseudo-instructions et un type d'instructions de l'unité centrale UC. Ces quatre types d'instructions sont référencés respectivement CO1 pour les pseudo-instructions correspondant aux excitations, CO2 pour les instructions en provenance de la mémoire PROM, CO3 pour les pseudo-instructions correspondant aux signaux audio, CO4 pour les instructions en provenance de l'unité centrale UC.

Pendant la première tranche du temps de traitement pourront être traitées les instructions CO1, pendant la deuxième tranche pourront être traitées les instructions CO2, pendant la troisième tranche pourront être traitées les instructions CO3, pendant la quatrième tranche pourront être traitées les instructions CO4 et pendant la cinquième tranche aucun traitement n'est réalisé.

Le temps minimal d'accès à la mémoire PROM ou temps atomique est compris entre 2 et 8 périodes de l'horloge générale du calculateur. Pour une horloge à 20 MHz le temps atomique peut être programmé de 50ns en 50ns de 100 ns à 400 ns.

Plusieurs accès successifs à la mémoire PROM sont nécessaires pour lire une instruction, dans le cas d'une mémoire 8 bits et d'une instruction de 32 bits qui est celui de l'exemple décrit, quatre accès sont requis. La durée nécessaire pour accéder à une instruction est alors égale à quatre fois le temps atomique. Cette durée est appelée période de base et son inverse fréquence de base.

On voit donc que dans l'hypothèse d'un temps atomique de 200 ns et d'une durée de la cinquième tranche de 400 ns, la fréquence maximale de traitement des instructions ou pseudo-instructions d'un des contextes vaut 277,8 kHz. La récurrence du séquencement vaut 3,6 µs. Il est possible alors de générer une excitation à 5 kHz avec 55,5 échantillons par période ou une excitation à 2,78 kHz avec 100 échantillons par période.

Dans l'hypothèse d'un temps atomique de 200 ns et d'une durée de la cinquième tranche nulle, la fréquence maximale de traitement d'un type d'instructions vaut 312,5 kHz. La récurrence du séquencement vaut 3,2 µs. Il est possible de générer une excitation à 5 kHz avec 62,5 échantillons par période ou une excitation à 3,125 kHz avec 100 échantillons par période.

Ce séquencement alloue des tranches de temps égales aux différents types d'instructions et les différents types d'instructions sont traités avec la même fréquence.

Un séquencement plus sophistiqué peut permettre d'augmenter la fréquence de traitement d'un type d'instructions par rapport à celle des autres types et d'adapter la fréquence de traitement selon le type d'instructions. Dans l'application avionique, les pseudo-instructions qui transmettent des excitations ont la fréquence la plus élevée.

Le dispositif séquenceur SEQ peut découper le temps de traitement en une succession de tranches de temps égales, ces tranches étant consacrées au traitement des instructions selon leur type. On suppose que les différents types d'instructions sont les mêmes que ceux décrits dans l'exemple précédent.

Pour chaque type d'instructions, on définit une période d'occurrence. Le premier type d'instructions CO1 traité est celui qui a la plus petite période d'occurrence. Cette période est dite période de référence et est définie par un multiple de la période de base. Le premier type d'instructions CO1 traité est affecté d'une phase dite de référence qui par convention est choisie de préférence nulle. Afin de garantir qu'à un instant donné un seul type d'instructions ne soit traité, les autres types d'instructions CO2, CO3, CO4 ont une contrainte de phase par rapport à la phase de référence et ces autres types d'instructions CO2, CO3, CO4 sont affectés d'un rang de traitement (de 2 à n) fonction de l'ordre croissant de leur contrainte de phase.

La période du deuxième type d'instructions CO2 traité est un multiple de la période de référence. Sa contrainte de phase est exprimée par l'incrément de phase par rapport à la phase de référence, cet incrément est compté en période de base.

La période du troisième type d'instructions CO3 traité est un multiple de la période de référence. Sa contrainte de phase est exprimée par l'incrément de phase par rapport à la contrainte de phase du deuxième type d'instructions CO2 traité, cet incrément est compté en période de base.

Plus généralement le type d'instructions traité avec le rang i (entier supérieur à deux) a pour période un multiple de la période de référence et sa contrainte de phase est exprimée par l'incrément de phase par rapport à la contrainte de phase du type d'instructions traité avec le rang i -1, cet incrément est compté en période de base. Dans l'exemple décrit i est un entier compris entre 3 et 4.

Les valeurs des périodes, phase de référence (si elle n'était pas nulle) et des contraintes de phase peuvent être codées sur plusieurs bits, par exemple trois. Ce cadencement peut être programmé sous la forme d'une ou plusieurs instructions de chargement. La valeur de la phase de référence pourrait aussi être codée si elle n'est pas nulle.

Dans l'exemple à quatre types d'instructions CO1, CO2, CO3, CO4 une seule instruction de chargement dont le paramètre possède 21 bits est suffisante si l'on considère que la phase de référence est nulle.

Les trois premiers bits aaa du paramètre codent la période de référence.

Voici les significations des codes utilisés :
001 : traitement à la période de base. Dans ce cas soit seul ce premier type d'instructions est traité, soit si un autre type d'instructions est traité, ce premier type d'instructions est inactif et la période de référence utile uniquement pour définir la période de l'autre type d'instructions traité.
010: traitement à la période de base multipliée par 2
011: traitement à la période de base multipliée par 3
100 : traitement à la période de base multipliée par 4
101 : traitement à la période de base multipliée par 5
110 : traitement à la période de base multipliée par 6
111 : traitement à la période de base multipliée par 7
000 : traitement à la période de base multipliée par 8

La phase de référence étant nulle, elle n'est pas codée.

Les trois bits suivants bbb du paramètre codent la contrainte de phase du deuxième type d'instructions CO2.

Voici les significations des codes utilisés :
000 : type d'instructions inutilisé,
001 : incrément de phase de une période de base par rapport à la phase de référence,
010 : incrément de phase de deux périodes de base par rapport à la phase de référence,
011 : incrément de phase de trois périodes de base par rapport à la phase de référence,
100 : incrément de phase de quatre périodes de base par rapport à la phase de référence,
101 : incrément de phase de cinq périodes de base par rapport à la phase de référence,
110 : incrément de phase de six périodes de base par rapport à la phase de référence,
111 : incrément de phase de sept périodes de base par rapport à la phase de référence,

Les trois bits suivants ccc codent la période du deuxième type d'instructions CO2.

Voici les significations des codes utilisés :
001 : traitement à la période de référence,
010 : traitement à une période double de la période de référence,
011 : traitement à une période triple de la période de référence,
100 : traitement à une période quadruple de la période de référence,
101 : traitement à une période quintuple de la période de référence,
110 : traitement à une période sextuple de la période de référence,
111 : traitement à une période septuple de la période de référence,
000 : traitement à une période octuple de la période de référence.

Les trois bits suivants ddd codent la contrainte de phase du troisième type d'instructions CO3.

Voici les significations des codes utilisés :
000 : type d'instructions inutilisé
001 : incrément de phase de une période de base par rapport à la contrainte de phase du deuxième type d'instructions,
010 : incrément de phase de deux périodes de base par rapport à la contrainte de phase du deuxième type d'instructions,
011 : incrément de phase de trois périodes de base par rapport à la contrainte de phase du deuxième type d'instructions,
100 : incrément de phase de quatre périodes de base par rapport à la contrainte de phase du deuxième type d'instructions,
101 : incrément de phase de cinq périodes de base par rapport à la contrainte de phase du deuxième type d'instructions,
110 : incrément de phase de six périodes de base par rapport à la contrainte de phase du deuxième type d'instructions.
111 : incrément de phase de sept périodes de base par rapport à la contrainte de phase du deuxième type d'instructions;

Les trois bits suivants eee codent la période du troisième type d'instructions CO3.

Voici les significations des codes utilisés :
001 : traitement à la période de référence,
010 : traitement à une période double de la période de référence,
011 : traitement à une période triple de la période de référence,
100 : traitement à une période quadruple de la période de référence.
101 : traitement à une période quintuple de la période de référence,
110 : traitement à une période sextuple de la période de référence,
111 : traitement à une période septuple de la période de référence,
000 : traitement à une période octuple de la période de référence.

Les trois bits suivants fff codent la contrainte de phase du quatrième type d'instructions CO4.

Voici les significations des codes utilisés :
000 : type d'instructions inutilisé,
001 : incrément de phase de une période de base par rapport à la contrainte de phase du troisième type d'instructions,
010 : incrément de phase de deux périodes de base par rapport à la contrainte de phase du troisième type d'instructions,
011 : incrément de phase de trois périodes de base par rapport à la contrainte de phase du troisième type d'instructions,
100 : incrément de phase de quatre périodes de base par rapport à la contrainte de phase du troisième type d'instructions,
101 : incrément de phase de cinq périodes de base par rapport à la contrainte de phase du troisième type d'instructions,
110 : incrément de phase de six périodes de base par rapport à la contrainte de phase du troisième type d'instructions,
111 : incrément de phase de sept périodes de base par rapport à la contrainte de phase du troisième type d'instructions.

Les trois bits suivants ggg codent la période du quatrième type d'instructions CO4.

Voici les significations des codes utilisés :
001 : traitement à la période de référence,
010 : traitement à une période double de la période de référence,
011 : traitement à une période triple de la période de référence,
100 : traitement à une période quadruple de la période de référence,
101 : traitement à une période quintuple de la période de référence,
110 : traitement à une période sextuple de la période de référence,
111 : traitement à une période heptuple de la période de référence,
000 : traitement à une période octuple de la période de référence.

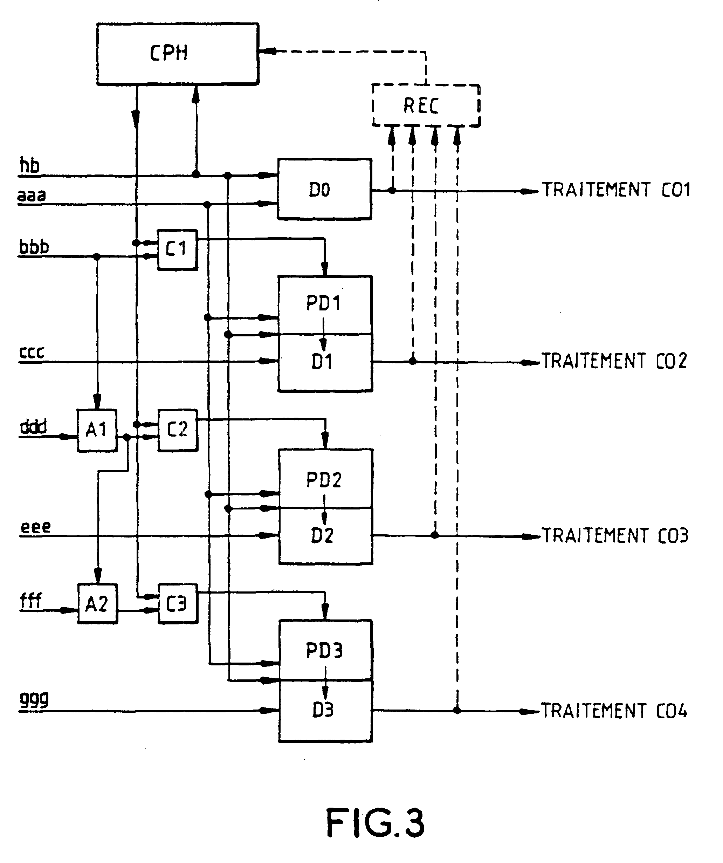

La figure 3 montre un schéma d'un exemple d'un dispositif séquenceur SEQ susceptible d'effectuer le séquencement qui vient d'être décrit.

Le dispositif séquenceur SEQ comporte un dispositif CPH délivrant une phase dite courante, un premier diviseur D0 associé au premier type d'instructions traité et un ensemble prédiviseur-diviseur (PD1, D1), (PD2, D2), (PD3, D3) associé à chacun des autres types d'instructions à traiter.

Le dispositif CPH délivrant la phase courante reçoit des impulsions d'une horloge de base hb battant à la fréquence de base. Dans l'exemple décrit ce dispositif est un compteur CPH à saturation, c'est à dire qu'après une remise à zéro, il génère une séquence de comptage jusqu' à ce que chacun des ensembles prédiviseur-diviseur ait démarré avec la contrainte de phase correcte.

A l'issue de cette séquence de comptage, il reste bloqué dans son état final et ne peut être ré initialisé que par une commande appropriée qui peut être un ré enclenchement général du contrôleur d'entrées-sorties CO ou qui peut être issu d'un dispositif de recalage REC optionnel qui détecte des événements anormaux, par exemple le traitement de plus d'un type d'instructions à un instant donné ou les instants correspondants aux multiples communs à l'ensemble des périodes des différents types d'instructions ce qui permet une réinitialisation plus fréquente.

Le premier diviseur D0 est un diviseur de l'horloge de base hb, il reçoit la valeur aaa de la période de référence et fournit des impulsions ayant la période de référence et la phase de référence. Ces impulsions correspondent aux instants de début de traitement des instructions de premier type et ont une durée égale à la durée de la période de l'horloge de base.

Chaque ensemble pré diviseur diviseur (PD1, D1), (PD2, D2), (PD3, D3) reçoit aussi l'horloge de base hb. Chaque pré diviseur PD1, PD2, PD3 reçoit la valeur de la période de référence aaa et un signal de démarrage issu de la comparaison entre la contrainte de phase du type d'instructions associé et la phase courante.

Chaque pré diviseur PD1, PD2, PD3 génère vers le diviseur associé, un signal de période égale à la période de référence et qui est phasé selon la contrainte de phase du type d'instructions associé.

Chaque diviseur D1, D2, D3 reçoit, en outre, la valeur de la période du type d'instructions associé. Chaque diviseur D1, D2, D3 génère donc des impulsions périodiques de durée égale à une période de base, ayant la période et la contrainte de phase du type d'instructions associé. Ces impulsions correspondent aux instants de début de traitement du type d'instructions associé.

Chaque pré diviseur PD1 à PD3 est associé à un comparateur C1 à C3 qui lui délivre le signal de démarrage. Chaque comparateur C1, C2, C3, reçoit la phase courante qu'il compare à la contrainte de phase, par rapport à la phase de référence, du type d'instructions associé. Le premier comparateur C1 reçoit directement la valeur de l'incrément de phase bbb par rapport à la phase de référence, cette valeur correspondant à la contrainte de phase du second type d'instructions CO2 traité .

Pour les autres types d'instructions CO3, CO4 de rang supérieur à deux, chaque comparateur C2, C3 coopère avec un additionneur A1, A2. Chaque additionneur A1, A2 délivre au comparateur C2, C3 la contrainte de phase, par rapport à la phase de référence, du type d'instructions associé. Chaque additionneur A1, A2 reçoit la contrainte de phase du type d'instructions traité avec le rang précédent et la valeur de l'incrément de phase ddd, fff par rapport à la dite contrainte de phase.

Le contrôleur d'entrées-sorties CO comporte également des moyens de gestion MG de la mémoire PROM avec un bloc tampon BT piloté par le dispositif séquenceur SEQ et les moyens de pilotage SP des pseudo-instructions. Ce bloc tampon BT accumule, dans l'exemple décrit, quatre octets consécutifs stockés dans la mémoire PROM de manière à constituer une entité de type instruction utilisable notamment par le dispositif d'analyse de code DAC.

L'unité centrale UC peut piloter le téléchargement de la mémoire PROM. Les moyens de gestion MG de la mémoire PROM comportent un dispositif séquenceur SEQP de la mémoire qui reçoit via la ligne série d'entrée lse des instructions d'effacement de tout ou partie de la mémoire PROM et/ou des instructions de chargement à partir d'une adresse de base située dans le paramètre de l'instruction. Cette adresse de base est transmise au pointeur d'accès POIN. Dans le cas d'une instruction d'effacement, le dispositif séquenceur SEQP produit la séquence spécifique à l'effacement complet ou bloc par bloc à partir de l'adresse de base.

Après une instruction de chargement, le dispositif séquenceur SEQP reçoit via la ligne série un ou plusieurs mots de 32 bits qu'il vient écrire à partir de l'adresse de base en respectant la séquence de programmation. En cas de problème détecté lors de l'écriture, il est prévu de mettre à jour un dispositif de stockage ST des anomalies rencontrées.

Le dispositif d'analyse de code DAC comporte un dispositif de décodage d'instruction DEC qui exploite en priorité les bits de rang 0 à 9 des instructions. Les bits de rang 0 à 7 sont analysés pour générer les commandes appropriées afin d'exécuter l'action contenue par l'instruction. Les bits 8 et 9 de l'instruction sont vérifiés différemment selon leur provenance puisqu'ils n'expriment pas la même chose comme on l'a décrit précédemment. Ces commandes sont envoyées au dispositif d'interface Dl cor cerné qui reçoit aussi les valeurs des paramètres.

Des blocs de sécurité SEC sont aussi prévus dans le dispositif d'analyse de code DAC. Ces blocs vérifient que les critères de cohérence sont respectés tels que la parité impaire des instructions ou des pseudo-instructions et la sécurité du déroulement des instructions et pseudo-instructions issues de la mémoire PROM.

Les pseudo-instructions en provenance de la mémoire PROM transitent, avant d'être décodées, dans un bloc tampon BTA ayant autant de tampons que de type de pseudo-instructions.

Le contenu du dispositif de stockage ST des anomalies rencontrées par le dispositif d'analyse de code DAC et par le dispositif séquenceur SEQP au cours de leur fonctionnement peut être transmis à l'unité centrale UC sur sa demande ou par exécution d'une instruction en provenance de la mémoire PROM. Cette transmission ne se fait que par l'une des lignes de transmission, dans l'exemple décrit on suppose que c'est la ligne série de sortie Iss2, Le dispositif de stockage ST peut être mis à zéro lors d'une réinitialisation du contrôleur d'entrées-sorties ou par une instruction dédiée.

## Revendications

1. Contrôleur d'entrées-sorties destiné à coopérer avec une unité centrale (UC) d'un calculateur qui communique avec des équipements électroniques (EQ) périphériques, relié d'une part à l'unité centrale (UC) et d'autre part aux équipements électroniques (EQ) périphériques, **caractérisé en ce que** la liaison avec l'unité centrale (UC) est réalisée avec une ligne série d'entrée (Ise) et au moins une ligne série de sortie (Iss1, Iss2) et **en ce qu'**il reçoit des instructions appartenant à plusieurs types définis en fonction des provenances des instructions, unité centrale (UC) ou mémoire (PROM) extérieure à l'unité centrale, et lorsque des instructions proviennent de ladite, en fonction de leurs formats, un premier type (C04) provenant de l'unité centrale (UC) via la ligne série d'entrée (Ise) et au moins un deuxième type (C01, C02, C03) provenant de ladite mémoire (PROM) extérieure à l'unité centrale et qu'il les exécute au moyen d'un dispositif d'analyse de code (DAC) cadencé par un dispositif séquenceur (SEQ) où si le contrôleur d'entrées-sorties (CO) a à traiter des instructions de n types, le dispositif séquenceur (SEQ) découpe le temps de traitement des instructions en n + 1 tranches, n est un entier supérieur ou égal à deux, n de ces tranches égales étant consacrées au traitement successif de chacun des n types d'instructions, la dernière tranche de durée programmable éventuellement nulle permet d'ajuster la récurrence du séquencement, le traitement recommençant à l'issue de la dernière tranche.

2. Contrôleur d'entrées-sorties selon la revendication 1, **caractérisé en ce que** certaines instructions d'un ou plusieurs type (C01, C02, C03) en provenance de la mémoire (PROM) sont des pseudo-instructions formées de listes de valeurs analogiques, stockées dans la mémoire (PROM), les types différents correspondant à des listes de valeurs de natures différentes.

3. Contrôleur d'entrées-sorties selon la revendication 1, **caractérisé en ce que** certaines instructions en provenance de la mémoire (PROM) forment des séquences exécutées après réception d'une instruction de synchronisation.

4. Contrôleur d'entrées-sorties selon l'une des revendications 1 à **caractérisé en ce que** le dispositif séquenceur (SEQ) alloue des tranches de temps égales au traitement des instructions selon leur type, chaque type d'instructions étant affecté d'une période d'occurrence, le premier type d'instructions (CO1) traité possédant la période la plus petite, cette période étant dite de référence, et une phase dite de référence, les autre types d'instructions (CO2, CO3, CO4) possédant une contrainte de phase par rapport à la phase de référence, ces autres types d'instructions étant traités avec un rang fonction de l'ordre croissant de leur contrainte de phase, leur période étant un multiple de la période de la référence.

5. Contrôleur d'entrées-sorties selon la revendication 4, **caractérisé en ce que** la phase de référence est choisie par convention nulle.

6. Contrôleur d'entrées-sorties selon l'une des revendications 4 ou 5, **caractérisé en ce que** la période de référence est un multiple d'une durée, dite période de base, qui correspond au temps d'accès à une instruction dans la mémoire (PROM)

7. Contrôleur d'entrées-sorties selon l'une des revendications 4 à 6, **caractérisé en ce que** la contrainte de phase du second type d'instructions (CO2) traité est exprimée par un incrément de phase par rapport à la phase de référence.

8. Contrôleur d'entrées-sorties selon l'une des revendications 4 à 7, **caractérisé en ce que** la contrainte de phase des types d'instructions de rang supérieur à deux est exprimée par un incrément de phase par rapport à la contrainte de phase du type d'instructions traité au rang précédant.

9. Contrôleur d'entrées-sorties selon l'une des revendications 4 à 8, **caractérisé en ce que** le dispositif séquenceur (SEQ) comporte:
- un dispositif (CPH) délivrant une phase dite courante à partir d'une horloge de base (hb) dont la période correspond au temps d'accès à une instruction dans la mémoire (PROM),
- un premier diviseur (DO) de l'horloge de base (hb) recevant en plus de l'horloge de base (hb), la valeur (aaa) de la période de référence et qui génère des impulsions ayant la période de référence et la phase de référence;
- un ensemble pré diviseur (PD1, PD2, PD3), diviseur (D1, D2, D3) associé respectivement à chacun des autres types d'instructions (CO2, CO3, CO4) à traiter, recevant l'horloge de base (hb) et la période de référence,
chaque pré diviseur (PD1, PD2, PD3) recevant la valeur de la période de référence et un signal de démarrage issu de la comparaison entre la contrainte de phase du type d'instructions associé et la phase courante, et générant, vers le diviseur (D1, D2, D3) du même ensemble que lui, un signal de période égale à la période de référence et phasé selon la contrainte de phase du type d'instructions associé,
chaque diviseur (D1, D2, D3) générant des impulsions ayant la période et la contrainte de phase du type d'instructions associé.

10. Contrôleur d'entrées-sorties selon la revendication 9, **caractérisé en ce que** le dispositif délivrant la phase courante (CPH) est un compteur à saturation recevant l'horloge de base (hb).

11. Contrôleur d'entrées-sorties selon la revendication 10, **caractérisé en ce que** le compteur à saturation est remis à zéro lors d'un ré enclenchement du contrôleur d'entées-sorties ou par un signal délivré par un dispositif de recalage (REC).

12. Contrôleur d'entrées-sorties selon l'une des revendications 9 à 11, **caractérisé en ce que** chaque pré diviseur (PD1, PD2, PD3) est associé à un comparateur (C1, C2, C3) qui lui délivre le signal de démarrage, chaque comparateur recevant la phase courante et la contrainte de phase, par rapport à la phase de référence, du type d'instructions associé.

13. Contrôleur d'entrées-sorties selon la revendication 12, **caractérisé en ce que** le premier comparateur (C1) reçoit directement la valeur (bbb) de l'incrément de phase du second type d'instructions par rapport à la phase de référence.

14. Contrôleur d'entrées-sorties selon l'une des revendications 12 ou 13, **caractérisé en ce que** les autres comparateurs (C2, C3) sont associés chacun à un additionneur (A1, A2), chaque additionneur délivrant la contrainte de phase, par rapport à la phase de référence, du type d'instructions associé, et recevant la contrainte de phase du type d'instructions traité avec le rang précédent et la valeur de l'incrémént de phase par rapport à la dite contrainte.

15. Contrôleur d'entrées-sorties selon l'une des revendications 1 à 14, **caractérisé en ce qu'**une instruction autre qu'une pseudo-instruction comporte trente-deux bits parmi lesquels un code sur au plus huit bits et un paramètre sur au plus vingt et un bits.

16. Contrôleur d'entrées-sorties selon la revendication 15, **caractérisé en ce que** les valeurs des périodes d'occurrence et des contraintes de phase des différents types d'instructions sont codées dans le paramètre d'une ou plusieurs instructions de chargement.

17. Contrôleur d'entrées-sorties selon l'une des revendications 2 à 16, **caractérisé en ce qu'**une pseudo-instruction est exécutée sous le contrôle d'une instruction d'activation.

18. Contrôleur d'entrées-sorties selon l'une des revendications 2 à 17, **caractérisé en ce qu'**une pseudo-instruction comporte sur trente-deux bits une liste de valeurs analogiques qui sont codées sous forme d'incréments.

19. Contrôleur d'entrées-sorties selon l'une des revendications 2 à 18, **caractérisé en ce qu'**une pseudo-instruction comporte sur trente deux bits une liste de valeurs analogiques qui sont codées sous forme de valeurs absolues.

20. Contrôleur d'entrées-sorties selon l'une des revendications 2 à 19, **caractérisé en ce qu'**il comporte des moyens de pilotage (SP) des pseudo-instructions qui reçoivent les instructions d'activation, qui conservent les codes des instructions d'activation et se chargent de l'accès à la mémoire (PROM) via un pointeur d'accès (POIN).

21. Contrôleur d'entrées-sorties selon la revendication 20, **caractérisé en ce que** le dispositif d'analyse de code (DAC) reçoit les pseudo-instructions et les codes des instructions d'activation des moyens de pilotage (SP) des pseudo-instructions.

22. Contrôleur d'entrées-sorties selon l'une des revendications 1 à 21, **caractérisé en ce qu'**il comporte des moyens de gestion (MG) de la mémoire (PROM) avec un bloc tampon (BT) piloté par le dispositif séquenceur (SEQ).

23. Contrôleur d'entrées-sorties selon la revendication 22, **caractérisé en ce que** le bloc tampon (BT) est piloté par les moyens de pilotage (SP) des pseudo-instructions.

24. Contrôleur d'entrées-sorties selon l'une des revendications 22 ou 23, **caractérisé en ce que** les moyens de gestion (MG) de la mémoire (PROM) comportent un dispositif séquenceur (SEQP) de téléchargement de la mémoire (PROM).

25. Contrôleur d'entrées-sorties selon l'une des revendications 17 à 24, **caractérisé en ce que** le dispositif d'analyse de code (DAC) comporte un dispositif de décodage d'instruction (DEC) et au moins un bloc de sécurité (SEC).

26. Contrôleur d'entrées-sorties selon l'une des revendications 17 à 25, **caractérisé en ce qu'**il comporte un dispositif de stockage des anomalies (ST) rencontrées par le dispositif d'analyse de code (DAC).

27. Contrôleur d'entrées-sorties selon l'une des revendications 1 à 26, **caractérisé en ce qu'**il comporte au moins un dispositif d'interface (DI) avec les équipements électroniques (EQ) périphériques, relié aux équipements électroniques (EQ) périphériques par au moins une voie d'interface (VP1) bidirectionnelle susceptible d'être configurée notamment en bus parallèle, liaison véhiculant des booléens, liaison série, liaison avec codeur optique.

28. Contrôleur d'entrées-sorties selon l'une des revendications 1 à 27, **caractérisé en ce qu'**il comporte un dispositif d'interface (DIP) avec l'unité centrale (UC), relié à l'unité centrale (UC) par les lignes d'entrée (lse) et de sortie (Iss1, Iss2).

## Claims

1. Input/output controller intended to interact with a central processor unit (UC) of a computer which communicates with peripheral electronic equipment (EQ), and connected on the one hand to the central processor unit (UC) and on the other hand to the peripheral electronic equipment (EQ), **characterized in that** the link with the central processor unit (UC) is produced with an input serial line (Ise) and at least one output serial line (Iss1, Iss2), and **in that** it receives instructions belonging to several types defined as a function of the origins of the instructions, central processor unit (UC) or memory (PROM) outside the central processor unit, and when instructions originate from the said memory (PROM) outside the central processor unit, as a function of their formats, a first type (C04) originating from the central processor unit (UC) via the serial input line (Ise) and at least one second type (C01, C02, C03) originating from the said memory (PROM) outside the central processor unit and **in that** it executes them by means of a code analysis device (DAC) clocked by a sequencer device (SEQ) where if the input/output controller (CO) has to process instructions of n types, the sequencer device (SEQ) chops the processing time for the instructions into n+1 slices, n is an integer greater than or equal to two, n of these equal slices being devoted to the successive processing of each of the n types of instructions, the last slice of possibly zero programmable duration makes it possible to adjust the recurrence of the sequencing, the processing recommencing at the termination of the last slice.

2. Input/output controller according to Claim 1, **characterized in that** certain instructions of one or more types (CO1, CO2, CO3) from the memory (PROM) are pseudo-instructions formed by lists of analogue values which are stored in the memory (PROM) the various types corresponding to lists of values of different natures.

3. Input/output controller according to Claim 1, **characterized in that** certain instructions from the memory (PROM) form sequences which are executed after reception of a synchronization instruction.

4. Input/output controller according to one of Claims 1 to [illegible], **characterized in that** the sequencer device (SEQ) allocates equal time slots to the processing of the instructions according to their type, each type of instructions being assigned an occurrence period, the first type of instructions (CO1) which is processed having the shortest period, this period being referred to as the reference period, and a phase referred to as the reference phase, the other types of instructions (CO2, CO3, CO4) having a phase constraint in relation to the reference phase, these other types of instructions being processed with a rank which is a function of the increasing order of their phase constraint, their period being a multiple of the period of the reference.

5. Input/output controller according to Claim 4, **characterized in that** the reference phase is chosen by convention to be zero.

6. Input/output controller according to one of Claims 4 and 5, **characterized in that** the reference period is a multiple of a duration, referred to as the base period, which corresponds to the access time for an instruction in the memory (PROM).

7. Input/output controller according to one of Claims 4 to 6, **characterized in that** the phase constraint of the second type of instructions (CO2) which is processed is expressed by a phase increment in relation to the reference phase.

8. Input/output controller according to one of Claims 4 to 7, **characterized in that** the phase constraint of the types of instructions of rank higher than two is expressed by a phase increment in relation to the phase constraint of the type of instructions which is processed in the preceding rank.

9. Input/output controller according to one of Claims 4 to 8, **characterized in that** the sequencer device (SEQ) has:
- a device (CPH) delivering a phase referred to as the current phase from a base clock (hb) whose period corresponds to the access time for an instruction in the memory (PROM),
- a first divider (DO) of the base clock (hb) which receives, in addition to the base clock (hb), the value (aaa) of the reference period and which generates pulses having the reference period and the reference phase;
- one predivider (PD1, PD2, PD3) and divider (D1, D2, D3) assembly associated respectively with each of the other types of instructions (CO2, CO3, C04) to be processed, and receiving the base clock (hb) and the reference period,
each predivider (PD1, PD2, PD3) receiving the value of the reference period and a start signal originating from the comparison between the phase constraint of the associated type of instructions and the current phase, and generating, in the direction of the divider (D1, D2, D3) of the same assembly as itself, a signal which has a period equal to the reference period and is phased according to the phase constraint of the associated type of instructions,
each divider (D1, D2, D3) generating pulses having the period and the phase constraint of the associated type of instructions.

10. Input/output controller according to Claim 9, **characterized in that** the device delivering the current phase (CPH) is a saturation counter receiving the base clock (hb).

11. Input/output controller according to Claim 10, **characterized in that** the saturation counter is zeroed when the input/output controller is re-engaged or by a signal delivered by a reset device (REC).

12. Input/output controller according to one of Claims 9 to 11, **characterized in that** each predivider (PD1, PD2, PD3) is associated with a comparator (C1, C2, C3) which delivers the start signal to it, each comparator receiving the current phase and the phase constraint, in relation to the reference phase, of the associated type of instructions.

13. Input/output controller according to Claim 12, **characterized in that** the first comparator (C1) directly receives the value (bbb) of the phase increment of the second type of instructions in relation to the reference phase.

14. Input/output controller according to one of Claims 12 or 13, **characterized in that** the other comparators (C2, C3) are each associated with an adder (A1, A2), each adder delivering the phase constraint, in relation to the reference phase, of the associated type of instructions, and receiving the phase constraint of the type of instructions which is processed with the preceding rank and the value of the phase increment in relation to the said constraint.

15. Input/output controller according to one of Claims 1 to 14, **characterized in that** an instruction other than a pseudo-instruction has thirty-two bits, including a code on at most eight bits and a parameter on at most twenty-one bits.

16. Input/output controller according to Claim 15, **characterized in that** the values of the occurrence periods and of the phase constraints of the various types of instructions are coded in the parameter of one or more loading instructions.

17. Input/output controller according to one of Claims 2 to 16, **characterized in that** a pseudo-instruction is executed under the control of an activation instruction.

18. Input/output controller according to one of Claims 2 to 17, **characterized in that** a pseudo-instruction has, on thirty-two bits, a list of analogue values which are coded in the form of increments.

19. Input/output controller according to one of Claims 2 to 18, **characterized in that** a pseudo-instruction has, on thirty-two bits, a list of analogue values which are coded in the form of absolute values.

20. Input/output controller according to one of Claims 2 to 19, **characterized in that** it has drive means (SP) for the pseudo-instructions which receive the activation instructions, which keep the codes of the activation instructions and deal with access to the memory (PROM) via an access pointer (POIN).

21. Input/output controller according to Claim 20, **characterized in that** the code analysis device (DAC) receives the pseudo-instructions and the codes of the activation instructions from the drive means (SP) for the pseudo-instructions.

22. Input/output controller according to one of Claims 1 to 21, **characterized in that** it has management means (MG) for the memory (PROM) with a buffer unit (BT) driven by the sequencer device (SEQ).

23. Input/output controller according to Claim 22, **characterized in that** the buffer unit (BT) is driven by the drive means (SP) for the pseudo-instructions.

24. Input/output controller according to one of Claims 22 or 23, **characterized in that** the management means (MG) for the memory (PROM) have a sequencer device (SEQP) for downloading to the memory (PROM).

25. Input/output controller according to one of Claims 17 to 24, **characterized in that** the code analysis device (DAC) has an instruction decoding device (DEC) and at least one security unit (SEC).

26. Input/output controller according to one of Claims 17 to 25, **characterized in that** it has a device (ST) for storing anomalies encountered by the code analysis device (DAC).

27. Input/output controller according to one of Claims 1 to 26, **characterized in that** it has at least one interface device (DI) for interfacing with the peripheral electronic equipment (EQ), connected to the peripheral electronic equipment (EQ) by at least one two-way interface channel (VP1) which can be configured in particular as a parallel bus, as a link carrying Boolean operations, as a serial link and as a link with an optical coder.

28. Input/output controller according to one of Claims 1 to 27, **characterized in that** it has an interface device (DIP) for interfacing with the central processor unit (UC), connected to the central processor unit (UC) by the input (Ise) and output (Iss1, Iss2) lines.

## Patentansprüche

1. Eingangs/Ausgangs-Controller, der dazu bestimmt ist, mit einer Zentraleinheit (UC) eines mit elektronischen Peripheriegeräten (EQ) kommunizierenden Rechners zusammenzuarbeiten, und einerseits mit der Zentraleinheit (UC) und andererseits mit den elektronischen Peripheriegeräten (EQ) verbunden ist, **dadurch gekennzeichnet, daß** die Verbindung mit der Zentraleinheit (UC) mit wenigstens einer seriellen Eingangsleitung (Ise) und wenigstens einer seriellen Ausgangsleitung (Issl, Iss2) verwirklicht ist, daß er Befehle empfängt, die mehreren Typen zugeordnet sind, die in Abhängigkeit von der Herkunft der Befehle, d. h. von der Zentraleinheit (UC) oder von einem Speicher (PROM) außerhalb der Zentraleinheit, und dann, wenn die Befehle von dem Speicher (PROM) außerhalb der Zentraleinheit ankommen, in Abhängigkeit von ihren Formaten definiert sind, wobei ein erster Typ (C04) von der Zentraleinheit (UC) über die serielle Eingangsleitung (Ise) ankommt und wenigstens ein zweiter Typ (C01, C02, C03) von dem Speicher (PROM) außerhalb der Zentraleinheit ankommt, und daß er sie mittels einer Codeanalysevorrichtung (DAC) ausführt, die durch eine Ablaufsteuerungsvorrichtung (SEQ) getaktet wird, wobei die Ablaufsteuerungsvorrichtung (SEQ) dann, wenn der Eingangs/Ausgangs-Controller (CO) Befehle von n Typen zu verarbeiten hat, die Verarbeitungszeit für die Befehle in n + 1 Schlitze unterteilt, wobei n eine ganze Zahl größer oder gleich zwei ist, wobei n dieser gleichen Schritte für die aufeinanderfolgende Verarbeitung jedes der n Typen von Befehlen verwendet werden und der letzte Schlitz mit programmierbarer Dauer, die eventuell null ist, die Einstellung des Sequentialisierungstakts ermöglicht, wobei die Verarbeitung bei Ausgabe des letzten Schlitzes erneut beginnt.

2. Eingangs/Ausgangs-Controller nach Anspruch 1, **dadurch gekennzeichnet, daß** bestimmte Befehle eines oder mehrerer Typen (C01, C02, C03), die vom Speicher (PROM) ankommen, Pseudobefehle sind, die aus Listen analoger Werte gebildet sind, die im Speicher (PROM) gespeichert sind, wobei die verschiedenen Typen Listen von Werten unterschiedlicher Arten entsprechen.

3. Eingangs/Ausgangs-Controller nach Anspruch 1, **dadurch gekennzeichnet, daß** bestimmte Befehle, die vom Speicher (PROM) ankommen, Sequenzen bilden, die nach dem Empfang eines Synchronisationsbefehls ausgeführt werden.

4. Eingangs/Ausgangs-Controller nach einem der Ansprüche 1 bis 3, **dadurch gekennzeichnet, daß** die Ablaufsteuerungsvorrichtung (SEQ) der Verarbeitung von Befehlen entsprechend ihrem Typ gleiche Zeitschlitze zuweist, wobei jedem Befehlstyp eine Auftrittsperiode zugeordnet ist, wobei der erste verarbeitete Befehlstyp (C01) die kleinste Periode besitzt, wobei diese Periode Referenzperiode genannt wird, und eine Referenzphase besitzt, während die anderen Befehlstypen (C02, C03, C04) eine Phasenbeschränkung in bezug auf die Referenzphase besitzen, wobei diese anderen Befehlstypen mit einem Rang verarbeitet werden, der von der zunehmenden Größe ihrer Phasenbeschränkung abhängt, wobei ihre Periode ein Vielfaches der Referenzperiode ist.

5. Eingangs/Ausgangs-Controller nach Anspruch 4, **dadurch gekennzeichnet, daß** für die Referenzphase nach Konvention der Wert null gewählt wird.

6. Eingangs/Ausgangs-Controller nach einem der Ansprüche 4 oder 5, **dadurch gekennzeichnet, daß** die Referenzperiode ein Vielfaches einer Dauer, einer sogenannten Basisperiode, ist, die der Zugriffszeit auf einem Befehl im Speicher (PROM) entspricht.

7. Eingangs/Ausgangs-Controller nach einem der Ansprüche 4 bis 6, **dadurch gekennzeichnet, daß** die Phasenbeschränkung des zweiten verarbeiteten Befehlstyps (C02) durch ein Phaseninkrement in bezug auf die Referenzphase gegeben ist.

8. Eingangs/Ausgangs-Controller nach einem der Ansprüche 4 bis 7, **dadurch gekennzeichnet, daß** die Phasenbeschränkung der Befehlstypen mit Rang größer als zwei durch ein Phaseninkrement in bezug auf die Phasenbeschränkung des verarbeiteten Befehlstyps des vorhergehenden Rangs gegeben ist.

9. Eingangs/Ausgangs-Controller nach einem der Ansprüche 4 bis 8, **dadurch gekennzeichnet, daß** die Ablaufsteuerungsvorrichtung (SEQ) umfaßt:
- eine Vorrichtung (CPH), die eine sogenannte momentane Phase anhand eines Basistakts (hb), dessen Periode der Zugriffszeit auf einen Befehl im Speicher (PROM) entspricht, liefert,
- einen ersten Teiler (DO) des Basistakts (hb), der zusätzlich zu dem Basistakt (hb) den Wert (aaa) der Referenzperiode empfängt und Impulse erzeugt, die die Referenzperiode und die Referenzphase besitzen;
- eine Gesamtheit aus Vorteiler (PD1, PD2, PD3) und Teiler (D1, D2, D3), die jeweils einem der anderen zu verarbeitenden Befehlstypen (C02, C03, C04) zugeordnet ist und den Basistakt (hb) und die Referenzperiode empfängt,
wobei jeder Vorteiler (PD1, PD2, PD3) den Wert der Referenzperiode und ein Startsignal, das sich aus dem Vergleich zwischen der Phasenbeschränkung des zugeordneten Befehlstyps und der momentanen Phase ergibt, empfängt und für den Teiler (D1, D2, D3) derselben Gesamtheit, zu der er gehört, ein Periodensignal erzeugt, das gleich der Referenzperiode ist und eine Phase hat, die der Phasenbeschränkung des zugeordneten Befehlstyps entspricht,
wobei jeder Teiler (D1, D2, D3) Impulse erzeugt, die die Periode und die Phasenbeschränkung des zugeordneten Befehlstyps besitzen.

10. Eingangs/Ausgangs-Controller nach Anspruch 9, **dadurch gekennzeichnet, daß** die Vorrichtung, die die momentane Phase (CPH) liefert, ein Zähler mit Sättigung ist, der den Basistakt (hb) empfängt,

11. Eingangs/Ausgangs-Controller nach Anspruch 10, **dadurch gekennzeichnet, daß** der Zähler mit Sättigung entweder dann auf null zurückgesetzt wird, wenn der Eingangs/Ausgangs-Controller neu gestartet wird, oder dann, wenn von einer Rücksetzvorrichtung (REC) ein Signal geliefert wird.

12. Eingangs/Ausgangs-Controller nach einem der Ansprüche 9 bis 11, **dadurch gekennzeichnet, daß** jedem Vorteiler (PD1, PD2, PD3) ein Komparator (C1, C2, C3) zugeordnet ist, der an ihn das Startsignal liefert, wobei jeder Komparator die momentane Phase und die Phasenbeschränkung in bezug auf die Referenzperiode des zugeordneten Befehlstyps empfängt.

13. Eingangs/Ausgangs-Controller nach Anspruch 12, **dadurch gekennzeichnet, daß** der erste Komparator (C1) direkt den Wert (bbb) des Inkrements der Phase des zweiten Befehlstyps in bezug auf die Referenzphase empfängt.

14. Eingangs/Ausgangs-Controller nach einem der Ansprüche 12 oder 13, **dadurch gekennzeichnet, daß** den anderen Komparatoren (C2, C3) jeweils ein Addierer (A1, A2) zugeordnet ist, wobei jeder Addierer die Phasenbeschränkung in bezug auf die Referenzphase des zugeordneten Befehlstyps liefert und die Phasenbeschränkung des verarbeiteten Befehlstyps mit dem vorhergehenden Rang und den Wert des Phaseninkrements in bezug auf die genannte Beschränkung empfängt.

15. Eingangs/Ausgangs-Controller nach einem der Ansprüche 1 bis 14, **dadurch gekennzeichnet, daß** ein von einem Pseudobefehl verschiedener Befehl zweiunddreißig Bits enthält, worunter sich ein Befehl mit höchstens acht Bits und ein Parameter mit höchstens einundzwanzig Bits befinden.

16. Eingangs/Ausgangs-Controller nach Anspruch 15, **dadurch gekennzeichnet, daß** die Werte der Auftrittsperioden und der Phasenbeschränkungen der verschiedenen Befehlstypen in dem Parameter eines oder mehrerer Ladebefehle codiert sind.

17. Eingangs/Ausgangs-Controller nach einem der Ansprüche 2 bis 16, **dadurch gekennzeichnet, daß** ein Pseudobefehl unter der Steuerung eines Aktivierungsbefehls ausgeführt wird.

18. Eingangs/Ausgangs-Controller nach einem der Ansprüche 2 bis 17, **dadurch gekennzeichnet, daß** ein Pseudobefehl in zweiunddreißig Bits eine Liste analoger Wert enthält, die in Form von Inkrementen codiert sind.

19. Eingangs/Ausgangs-Controller nach einem der Ansprüche 2 bis 18, **dadurch gekennzeichnet, daß** ein Pseudobefehl in zweiunddreißig Bits eine Liste analoger Werte enthält, die in Form von Absolutwerten codiert sind.

20. Eingangs/Ausgangs-Controller nach einem der Ansprüche 2 bis 19, **dadurch gekennzeichnet, daß** er Fernsteuerungsmittel (SP) für Pseudobefehle enthält, die die Aktivierungsbefehle empfangen, die die Codes der Aktivierungsbefehle halten und die bei einem Zugriff auf den Speicher (PROM) mit einem Zugriffszeiger (POIN) geladen werden.

21. Eingangs/Ausgangs-Controller nach Anspruch 20, **dadurch gekennzeichnet, daß** die Codeanalysevorrichtung (DAC) die Pseudobefehle und die Codes der Aktivierungsbefehle der Fernsteuerungsmittel (SP) der Pseudobefehle empfängt.

22. Eingangs/Ausgangs-Controller nach einem der Ansprüche 1 bis 21, **dadurch gekennzeichnet, daß** er Steuerungsmittel (MG) für den Speicher (PROM) enthält, die einen Pufferblock (BT) besitzen, der durch die Ablaufsteuerungsvorrichtung (SEQ) ferngesteuert wird.

23. Eingangs/Ausgangs-Controller nach Anspruch 22, **dadurch gekennzeichnet, daß** der Pufferblock (BT) durch die Fernsteuerungsmittel (SP) der Pseudobefehle ferngesteuert wird.

24. Eingangs/Ausgangs-Controller nach einem der Ansprüche 22 oder 23, **dadurch gekennzeichnet, daß** die Steuerungsmittel (MG) des Speichers (PROM) eine Ablaufsteuerungsvorrichtung (SEQP) zum Fernladen des Speichers (PROM) enthalten.

25. Eingangs/Ausgangs-Controller nach einem der Ansprüche 17 bis 24, **dadurch gekennzeichnet, daß** die Codeanalysevorrichtung (DAC) eine Befehlsdecodierungsvorrichtung (DEC) und wenigstens einen Sicherheitsblock (SEC) enthält.

26. Eingangs/Ausgangs-Controller nach einem der Ansprüche 17 bis 25, **dadurch gekennzeichnet, daß** er eine Vorrichtung (ST) zum Speichern von Anomalien, die von der Codeanalysevorrichtung (DAC) angetroffen werden, enthält.

27. Eingangs/Ausgangs-Controller nach einem der Ansprüche 1 bis 26, **dadurch gekennzeichnet, daß** er wenigstens eine Schnittstellenvorrichtung (DI) mit den elektronischen Peripheriegeräten (EQ) enthält, die mit den elektronischen Peripheriegeräten (EQ) über wenigstens einen bidirektionalen Schnittstellenpfad (VP1) verbunden ist und insbesondere als paralleler Bus, als Verbindung, die Boolesche Ausdrücke transportiert, als serielle Verbindung oder als Verbindung mit optischem Codierer konfiguriert werden kann.

28. Eingangs/Ausgangs-Controller nach einem der Ansprüche 1 bis 27, **dadurch gekennzeichnet, daß** er eine Schnittstellenvorrichtung (BIP) mit der Zentraleinheit (UC) enthält, die mit der Zentraleinheit (UC) über die Eingangsleitungen (Ise) und Ausgangsleitungen (Issl, Iss2) verbunden ist.
